# EUROPEAN PATENT APPLICATION

(11) **EP 3 038 036 A1**
(43) Date of publication of application: **29.06.2016**
(21) Application number: 14838426.6
(22) Date of filing: 19.08.2014
(51) Int. Cl.: G06Q 20/20, G06Q 20/32

(54) **PAYMENT SERVICE METHOD AND SYSTEM USING CODE RECOGNITION**

(30) Priority: 20.08.2013 KR 20130098506
(71) Applicant: Instapay Inc., Seoul 153-772 (KR)
(72) Inventor: BAE, Jae Kwang, Seoul 135-845 (KR)
(74) Representative: V.O.
(86) International application number: PCT/KR2014/007667
(87) International publication number: WO 2015/026127

(57) **Abstract**

A payment service method and system using code identification is disclosed. The payment service method includes the steps of: identifying first code information for product order; transmitting the first code information to a seller terminal; identifying second code information that is proposed for payment from the seller terminal for the first code information; and processing payment information, which is included in the second code information, through communication with a payment server.

## Description

### TECHNICAL FIELD

Embodiments of the inventive concept relate to a payment service method and system for improving convenience of a buyer and a seller.

### BACKGROUND ART

Point-Of-Sales (POS) systems are used as systems for recording sold outcomes of products at cash departments of distributors such as big-box discount retailers, supermarkets, and convenience stores. POS systems process selling data of products through computation at the time when the products are sold out, which may be referred to as 'POS information management system'. In recent years, the POS systems are used as same as traditional cash desks in term and now have been regarded as essential information systems in the distribution industry.

In the POS system, product information read by a cashing scanner are promptly transferred to a computer and product barcodes read by the scanner are conveyed to a cashing account. That process contributes to shortening of a cashing work because of quick treatment in a moment without a course of inputting prices by a clerk, so it could be helpful to solve even an accounting problem due to a mistake while the clerk is inputting prices. In the case that a customer buys a pack of chewing gum, it is possible for a POS system to record detailed unit product specification such as product name, manufacturer, product price, and so on. Thus, by clearly appreciating information about products on sale and recognizing at a look when and how many which product is sold out, it improve the distributional efficiency as well as preventing an out-of-stock state.

For example, a customer strolls and puts products, which is to be bought, into a shopping cart or basket, in a store while moving the shopping cart or basket, and then goes to a POS terminal of the cash desk of the store. Next, at the POS terminal, a clerk takes out the products one by one and uses a scanner to read barcodes (product codes), which are each attached to the products, for registration. Since it is especially allowable to search PLU files corresponding to product code information read from respective barcodes and to sum the total price of the bought products for settlement of accounts, the distributional efficiency can be enhanced.

However, for the POS-based payment method, because a seller must check barcodes of products, which is brought by customers for purchase, one by one by a scanner for accounting the products, it takes much persons and time in accounting product prices.

Further, customers inevitably meet with inconvenience because they waits for the completion of accounting and their personal information would be exposed to other customers, a clerk as well, while payment is being settled through their payment instruments (e.g., credit cards).

### DISCLOSURE OF THE INVENTION

### TECHNICAL PROBLEM

Embodiments of the inventive concept provide a payment service method and system capable of minimizing human resource and time consumption in accounting product prices.

Embodiments of the inventive concept provide a payment service method and system capable of automating an accounting course using multi-dimensional codes.

Embodiments of the inventive concept provide a payment service method and system capable of providing more secured and simplified payment environments.

### TECHNICAL SOLUTION

According to an embodiment of the inventive concept, a payment service method may include the steps of: identifying first code information for product order; transmitting the first code information to a seller terminal; identifying second code information that is proposed for payment from the seller terminal for the first code information; and processing payment information, which is included in the second code information, through communication with a payment server.

According to an aspect, the first code information may include a product price, and wherein the first code information may further include at least one product information among supplemental information relevant to conditions of product name, product volume, and product selling.

According to another aspect, the seller terminal may generate the second code information, which includes a payment request price, from the first code information.

According to still another aspect, the step of processing the payment information included in the second code information may include the step of transmitting information of a selected payment instrument to the payment server and requesting payment by the payment instrument.

According to an embodiment of the inventive concept, a payment service method may include the steps of: receiving first code information, which is for product order and identified at a buyer terminal, from the buyer terminal; generating second code information, which is for payment to the first code information, from the first code information; and outputting the second code information through output means and proposing the second code information to the buyer terminal, wherein the buyer terminal may identify the second code information and may process payment information included in the second code information.

According to an aspect, the step of generating the second code information may include the step of generating the second code information, which includes a payment request price, from the first code information.

According to another aspect, the step of generating the second code information may include the step of generating the second code information with one of multi-dimensional codes among barcode, Quick Response (QR) code, data matrix, and maxicode.

According to an embodiment of the inventive concept, a payment service method mat include the steps of: transmitting first code information, which is for product order and identified at a buyer terminal, to a seller terminal in response to a request of the buyer terminal; receiving second code information, which is for payment and generated from the seller terminal for the first code information, from the buyer terminal; and processing payment information, which is included in the second code information, in response to a payment request of the buyer terminal, wherein the buyer terminal may process the payment information after identifying the second code information that is proposed from the seller terminal.

According to an aspect, the payment service method may further include the step of storing at least one payment instrument relevant to the buyer terminal, wherein the step of processing the payment information included in the second code information may include the step of processing the payment information by a payment instrument, which is selected by the buyer terminal, from payment instruments.

According to another aspect, the payment service method may further include the step of, if the step of processing the payment information is completed, transmitting a result of payment approval to the buyer terminal and the seller terminal.

### ADVANTAGEOUS EFFECTS

According to an embodiment of the inventive concept, by implementing a payment model in a form that a buyer as individual directly identifies a product code and transmits the product code, a seller may minimize human resource and time consumption for accounts because there is no need of scanning all product codes for so many buyers.

According to an embodiment of the inventive concept, since a seller generates a payment code for a product to be bought by a buyer and then proposes the payment code to the buyer, and the buyer settles payment after identifying the payment code, it may be allowable to accomplish an unmanned and automatic system and to provide more secured and simplified payment environments because a payment instrument of the buyer is totally unexposed to a seller.

### BRIEF DESCRIPTION OF THE DRAWINGS

FIG. 1 is a diagram schematically illustrating a correlation among a buyer terminal, a payment server, and a seller terminal in an embodiment of the inventive concept.
FIG. 2 is a flow chart showing a payment service method using code identification in an embodiment of the inventive concept.
FIGS. 3 to 5 are exemplary diagrams illustrating service screens of a buyer terminal employing a code-identification based payment service in an embodiment of the inventive concept.
FIG. 6 is a block diagram illustration an internal configuration of a payment service system using code identification in an embodiment of the inventive concept.

### BEST MODE FOR CARRYING OUT THE INVENTION

Hereinafter, embodiments of the inventive concept will be described in conjunction with the accompanied drawings.

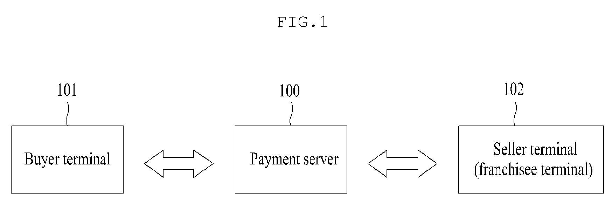

FIG. 1 is a diagram schematically illustrating a correlation among a buyer terminal, a payment server, and a seller terminal in an embodiment of the inventive concept. FIG. 1 illustrates a payment server 100, a buyer terminal 101, and a seller terminal 102. The arrows of FIG. 1 indicate that data can be transmitted and received through a wired/wireless network between the buyer terminal 101 and the payment server 100, and between the payment server 100 and the seller terminal 102.

The payment server 100 may provide an app service capable of mediate payment between the seller terminal 102 and the buyer terminal 101 equipped with a service-specific application. As an example, the payment server 100 may act as a service platform providing a mobile purse service, by registering and managing payment instruments respective to service users, and may provide a code-identification based payment service through such a service platform. Accordingly, a service-specific application relevant to payment (hereinafter, referred to as 'payment app') may be implemented in a form of independently operating program, or may be configured in an in-app form with a specific program and then may be operable on the specific application.

The buyer terminal 101 may indicate all kinds of terminal devices, which can be equipped and executable with payment apps, such as smart phone, tablet, laptop computer, Digital Multimedia Broadcasting (DMB) terminal, Portable Multimedia Player (PMP), and so on. Those terminals may perform general service operations such as configuring service screens, inputting data, transmitting and receiving data, storing data, and so on.

The seller terminal 101, also as a terminal device which can be equipped and executed with a payment app, may be a mobile terminal, e.g., smart phone, tablet, laptop computer, DMB, or PMP, used by a seller (manager or storekeeper), or a common terminal device such as POS terminal or kiosk which is installed in the franchisee.

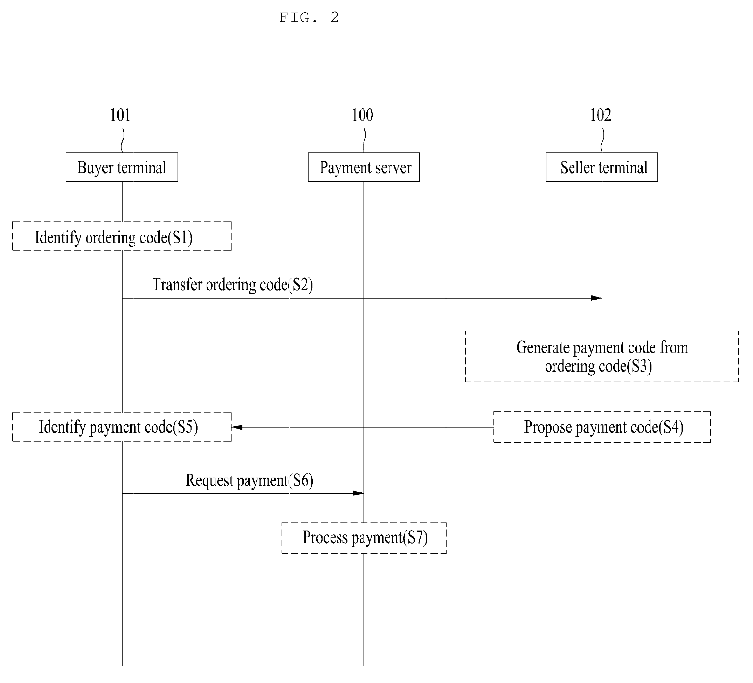

Referring to FIG. 2, a payment service method will be described below.

A buyer may identify code information (hereinafter, referred to as 'ordering code') of a product to be bought after walking into a store and executing a payment app of the buyer terminal 101.

An ordering code, for recording product information, may be prepared in various forms and modes such as barcode, QR code, data matrix, and maxicode, and may be utilized to order a product by recording product information therein. During this, product information may basically include a product price to be sold, and may further include a product name and supplemental information (e.g., discount coupon, installment terms, etc.) relevant to other selling terms.

An ordering code may be proposed to buyers in various modes such as direct attachment to a practical product, hard copy printed on a medium like paper or film, soft copy displayed on a screen of a monitor, and so on.

As an example, in the case of accounting a price of a product after choosing the product in a mart or convenience store, an ordering code may be proposed to a buyer in a form of attachment to the product. Otherwise, in the case of accepting a product after ordering the product in a restaurant or theater, an ordering code may be proposed in a form of printing on a paper or may be also proposed through a clerk's mobile terminal (e.g., tablet, etc.) or a common terminal installed at a specific position of a store. For other example, in an amusement park where users are able to buy products while moving to places, an ordering code may be proposed through kiosks installed at several places of stores.

As such, an ordering code proposing method may be variable in accordance with product types or supply patterns and may be selectively determined by conditions of stores.

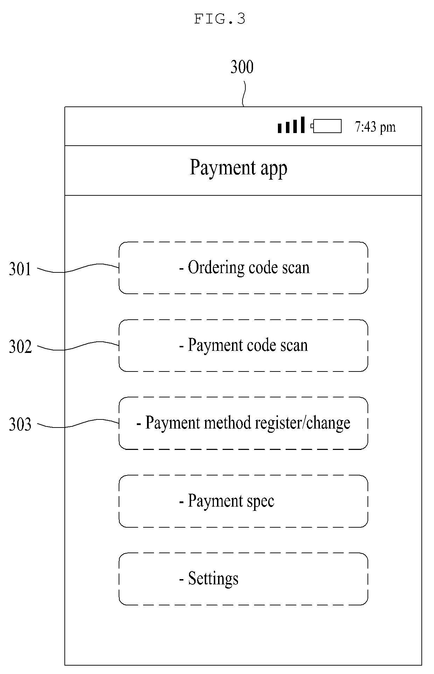

FIGS. 3 to 5 are exemplary diagrams illustrating service screens of a buyer terminal.

In the case that a buyer executes a payment app, a main screen 300 including main menu may be activated in a buyer terminal as shown in FIG. 3. As an example, the main screen 300 may basically provide an 'ordering code scan' menu 301 for identifying an ordering code at a product ordering step, and a 'payment code scan' menu 302 for identifying a payment code at a payment step. Additionally, the main screen 300 may further provide a 'payment instrument register/change' menu 303 for preliminarily registering at least one of payment instruments (e.g., credit card, check card, debit card, gift card, membership card, gift certificate, mobile phone, etc.) or for changing a registered payment instrument.

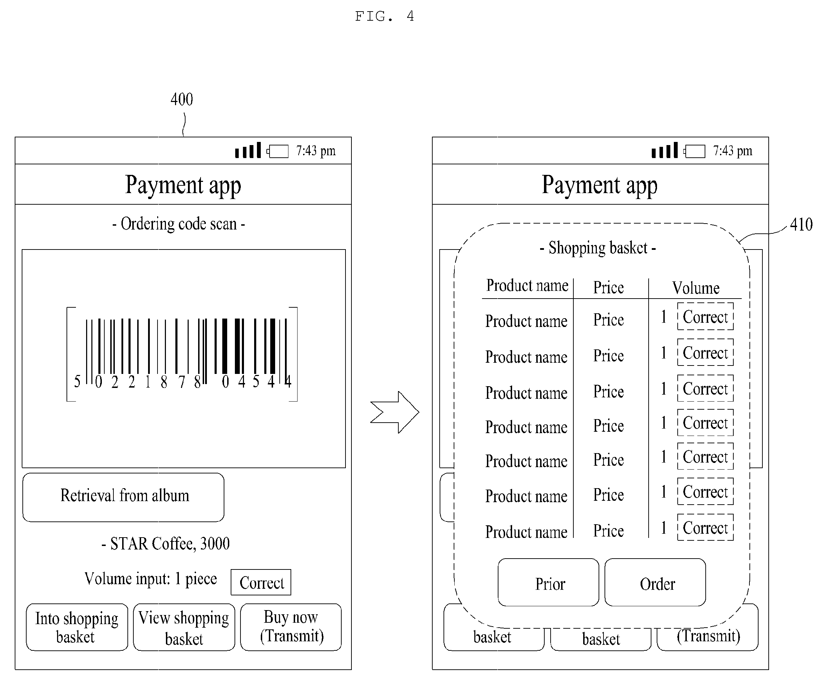

In the case of a buyer selects the 'ordering code scan' menu 301 in the main screen 300 of the payment app, the main screen 300 may turn to a code scan screen 400 for ordering products as shown in FIG. 4. During this, the code scan screen 400 may be basically provided to allow a camera to photograph. Accordingly, the buyer terminal 101 may use an image extraction module to identify an ordering code, which is proposed by a store according to manipulation of a buyer, for a product selected by the buyer. During this, the image extraction module may be formed of various types of modules capable of extracting an image, for example, a camera module or scan module which are equipped in the buyer terminal 101.

And the code scan screen 400 may provide an interface for selecting options such as product volume for a product of an ordering code identified through the code scan. Additionally, the code scan screen 400 may provide a 'retrieval from album' menu capable of retrieving an image from a terminal and identifying a code thereof, an 'into shopping basket' menu for temporarily reserving products of ordering codes identified through the code scan by the shopping basket function, a 'view shopping basket' menu for showing a product list temporarily reserved in the shopping basket, and a 'buy now' menu (transmit) for transferring an ordering code, which is identified through the code scan for product order and payment, to the payment server 100m which is a service system.

A buyer may use the 'buy now' menu to request individual transmission after scanning an ordering code for each product in the code scan screen 400, or as shown in FIG 4, may use the shopping basket function to request batch transmission for the entire product in a shopping basket screen 410 after completing product selection.

Returning to FIG. 2, the buyer terminal 101 may transmit at least one ordering code, which is identified through the code scan by a request of a buyer, to the seller terminal 102 through the payment server 100 (S2). The payment server 100, performing information mapping and transmission necessary for service between the seller terminal 102 and the buyer terminal 101 equipped with a payment app, may transmit an ordering code, which is identified in the buyer terminal 101, to the seller terminal 102 in response to a request of the buyer terminal 101. During this, an ordering code transmitted to the seller terminal 102 may include name and volume of a product selected by a buyer, and supplemental information relevant to the product. An ordering code may be mapped with identification information (e.g., terminal phone number, personal information set in a payment app, etc.) for appreciating a buyer and then may be transmitted to the seller terminal 102.

If an ordering code transmitted by a buyer is received from the buyer terminal 101, the seller terminal 102 may user the ordering code to generate code information for payment (hereinafter, referred to as 'payment code')(S3). During this, the payment code may be generated in various forms such as barcode, QR code, data matrix, and maxicode. Especially, a payment code may be recorded with payment information which is transmitted by a buyer and includes a product purchase spec and payment request price as the total price. For example, in the case that a buyer transmits an ordering code for 10 products, the seller terminal 102 may confirm the buyer's product purchase spec by the ordering code which is received from the seller terminal 102 and may account the total price for the products. Additionally, a payment code may include identification information (e.g., terminal phone number, corporate registration number, etc.) for appreciating a buyer.

Additionally, the seller terminal 102 may propose a payment code of a product, which is to be bought, to a buyer by displaying the payment code, which is generated for an ordering code of the buyer, on specific display means (e.g., terminal screen, additional monitor, etc.) or by printing the payment code in a paper (S4)

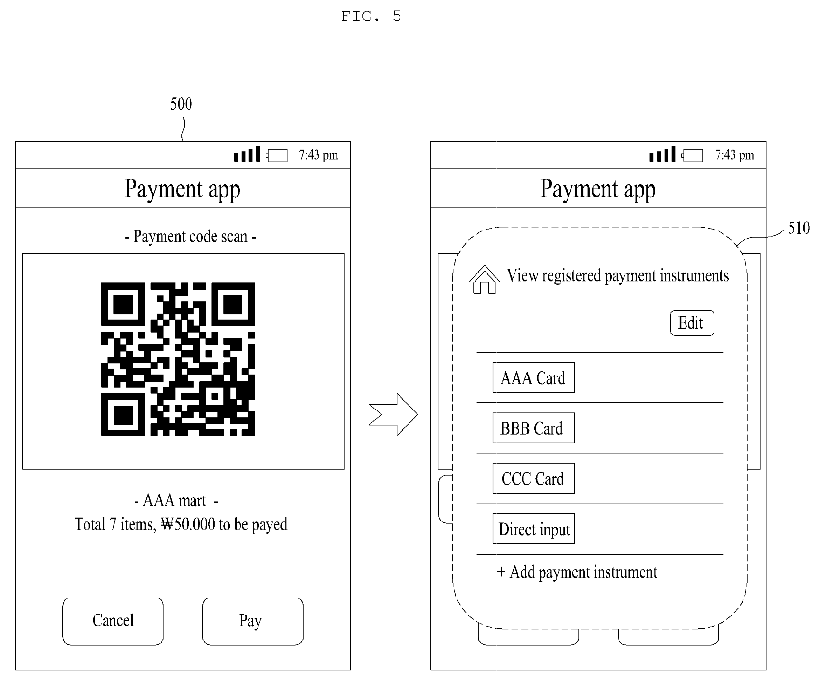

The buyer terminal 101 may identify a payment code through a payment app in accordance with a buyer's manipulation (S5). As an example, in the case that a buyer selects the 'payment code scan' menu 302 in the main screen 300 of the payment app shown in FIG. 3, the screen may turn to a code scan screen 500 for payment as shown in FIG. 5. During this, the code scan screen 500 may be basically provided to allow a camera to photograph. Accordingly, the buyer terminal 101 may use an image extraction module to identify a payment code which is proposed by the seller terminal.

And the code scan screen 500 may be basically provided with a 'pay' menu for requesting payment for a payment code which is identified through the code scan, and may be provided with a payment instrument list 510 in the case that a buyer selects the 'pay' menu after identifying the payment code. During this, the payment instrument list 510 may be exposed with payment instruments which are preliminarily registered by a buyer, and may be provided with a 'direct input' menu for allowing other payment instruments except the preliminarily registered payment instruments.

A buyer may select one of the preliminarily registered payment instruments or directly input payment instruments, after scanning a payment code, to request payment. Returning to FIG. 2, the buyer terminal 101 may process payment information, which is included in a payment code, through communication with the payment server 100 in accordance with a buyer's request after identifying the payment code. That is, the buyer terminal 101 may request payment using a corresponding payment instrument by transmitting information about the payment instrument, which is selected by a buyer, to the payment server 100 together with a payment code which is identified through the code scan (S6) .

Hereupon, the payment server 100 may process payment information included in a payment code, i.e., payment for a price required by a seller, in response to a payment request of the buyer terminal 101 (S7). During this, in the case that a buyer selects one of the preliminarily registered payment instruments, the payment server 100 may use information, which is stored in a database, to settle payment. In the case that a buyer selects a payment instrument through direct input, the payment server 100 may use input information, which is received from the buyer terminal 101, to settle payment. Then, if payment is completed for payment information included in a payment code, the payment server 100 may transmit a result of payment approval to at least one of the buyer terminal 101 and the seller terminal 102. The payment server 100 may be formed in a single system combined with payment agent servers (not shown) such as Payment Gateway (PG) or Value Add Network (VAN), or may be formed in an additional system different from a payment agent server. Through this formation, the payment server may settle payment by a payment agent server or by direct communication with a financial cooperation server without a payment agent server.

Summarily, a service scenario of a payment model according to the inventive concept is as follows.
(1) A buyer walks into a store and identifies an ordering code by a mobile terminal.
(2) The buyer transmits the identified ordering code to a seller's mobile terminal or a franchisee's terminal.
(3) The seller generates a payment code through his mobile terminal or the franchisee's terminal from the ordering code, which is transmitted by the buyer, and thereafter proposes the payment code.
(4) At the time of payment for product, the buyer identifies the payment code, which is proposed by the seller, through his mobile terminal and then settles payment.

As another example, it may be also practicable to implement a payment model proposing a payment code by a seller after a conventional accounting course if a buyer informs the seller of a product to be bought, without identification of an ordering code, and then settling payment using the payment code by the buyer.
(1) A buyer walks into a store and selects products to be bought.
(2) A seller accounts the total price of the products selected by the buyer and thereafter proposes a code, which includes selling prices and product information, through his mobile terminal or an additionally printed display screen or paper. For example, when a buyer purchases a product about 10,000 won from a kiosk, a seller generates and proposes a barcode printed paper on which 10,000 won is marked, or a code including the price of 10,000 won and product information through his mobile terminal.
(3) At the time of payment for product, the buyer identifies a payment code, which is proposed by the seller, through his mobile terminal and then settles payment.

In the aforementioned payment service method, a control method of the payment server for inter-terminal payment mediation, a terminal control method at a buyer side purchasing products, and a terminal control method at a seller side selling products may include at least two or more operations based on the descriptions in connection with FIGS. 1 to 5. Additionally, the aforementioned payment service method may include more simplified or added operations, or may be variable with operations in sequence or position.

Methods according to embodiments of the inventive concept may be implemented in a form of program instructions executable through various computer systems and may be recorded in a computer-readable medium. Especially, this embodiment may include a computer-readable medium which records a program including the steps of transmitting first code information, which is for product order and identified by a buyer terminal, to a seller terminal in response to a request of the seller terminal; receiving second code information, which is for payment and generated from the seller terminal for the first code information, from the buyer terminal; and processing payment information, which is included in the second code information, in accordance with a payment request of the buyer terminal.

A program according to this embodiment may be formed of a PC-based program or a mobile-terminal specific application. A payment app of this embodiment may be implemented in an independently operating program, or may be formed in an in-app allowing an operation on the specific application.

Additionally, a service method according to this embodiment may be performed by a payment app which is involved in a server system (payment server) and controls a user terminal. For example, such an application may include modules for controlling a user terminal to perform steps which include the aforementioned payment service method.

A buyer-side application may include: a module controlling a user terminal to identify first code information for product order; a module controlling the user terminal to transmit the first code information to a seller terminal; a module controlling the user terminal to identify the second code information which is proposed by the seller terminal for the first code information; and a module controlling the user terminal to process payment information, which is included in the second code information, through communication with a payment server.

A seller-side application may include: a module controlling a user terminal to receive first code information which is for product order and identified by a buyer terminal, from a buyer terminal; a module controlling the user terminal to generate second code information, which is for payment, for the first code information from the first code information; and a module controlling the user terminal to propose the second code information to the buyer terminal by outputting the second code information through output means. Here, the buyer terminal may identify the second code information and may process payment information included in the second code information.

Additionally, this application may be installed in a user terminal through a file which is provided by a file distribution system. As an example, a file distribution system may include a file transmission part (not shown) to transmit the file in accordance with a request of a user terminal.

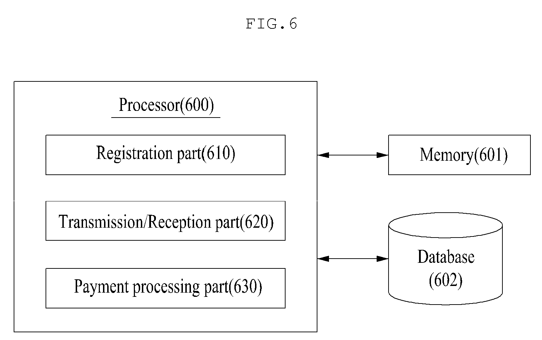

FIG. 6 is a block diagram illustration an internal configuration of a payment service system using code identification in an embodiment of the inventive concept. A payment service system according to an embodiment may be formed by excluding or adding a part of elements based in the descriptions of the payment service method in connection with FIGS. 1 to 5. Additionally, two or more elements may be combined each other and may be variable in operation sequence or in correlation mode.

As shown in FIG. 6, a payment service system according to an embodiment may be formed to include a processor 600, which is composed of a registration part 610, a transmission/reception part 620, and a payment processing part 630, a memory 601, and a database 602.

The memory 601 may store a program including instructions for providing a code-identification based payment service. The steps of the payment service method described through FIGS. 1 to 5 may be executed by the program stored in the memory 601. For example, the memory 601 may be a hard disk, an SSD, an SD card, or another storage medium.

The database 602, as a reservoir capable of storing and retaining all information necessary for providing a payment service, may store user-specific personal information, payment instrument list, authentication information, payment information for each payment instrument (e.g., card number, effective term, card issue company, etc.).

The processor 600, as a unit processing operations according to instructions of a program stored in the memory 601, may include a microprocessor such as CPU. A detailed configuration of the processor 600 is as follows.

The registration part 610 may register payment instruments, which are relevant to a user terminal, for users. For example, the registration part 610 may receive payment information, which corresponds to each payment instrument, through a user terminal from a user and then may register at least one payment instrument for the user by storing the payment information in the database 602 in connection with the user and the user terminal. Additionally, the registration part 610 may receive passwords respective to payment instruments from a user and may register the passwords for their corresponding payment instruments. During this, the passwords may be utilized as transaction information for confirming a user in payment using the payment instruments.

The transmission/reception part 620 may transmit an ordering code, which is identified by a buyer terminal, to a seller terminal in response to a request of the buyer terminal. During this, the ordering code may include a name and volume of a product to be purchased by a buyer, and supplemental information relevant to product selling. Additionally, the ordering code may further include buyer identification information (e.g., terminal phone number, personal information set in a payment app, etc.) for identifying a buyer.

And the transmission/reception part 620 may receive a payment code, which is generated and proposed from a seller terminal for an ordering code, from a buyer terminal. If an ordering code is received from a buyer terminal, a seller terminal may use the ordering code to generate a payment code for payment and thereafter may display the payment code through a terminal screen or an additional monitor for proposing the payment code to a buyer. During this, the payment code may include a product purchase spec included in the ordering code, and a payment request price as the total price, and moreover may even include seller identification information for identifying a seller.

The payment processing part 630 may process payment information, which is included in a payment code, in accordance with a payment request of a buyer terminal. A buyer terminal may identify an ordering code, which is proposed from a seller terminal, and thereafter may select one of preliminarily registered payment instruments or directly input payment instruments to request payment. During this, in the case that a buyer selects one from preliminarily registered payment instruments, the payment processing part 630 may use its corresponding information, which is stored in the database 602, to settle payment. In the case that a buyer selects a directly input payment instrument, the payment processing part 630 may use input information, which is received from a buyer terminal when requesting payment, to settle the payment. Additionally, if payment for payment information included in an payment code is completed, the payment processing part 630 may transmit an approval result of payment to a buyer terminal and a seller terminal.

In a payment service method and system according to the inventive concept, it may be allowable to provide a service model that a seller may generate a payment code for a product to be purchased by a buyer and may propose the payment code to the buyer, and then the buyer may identify the code, which is generated for payment, to settle the payment.

As such, according to an embodiment of the inventive concept, by implementing a payment model in a form that a buyer as individual directly identifies a product code and transmits the product code, a seller may minimize human resource and time consumption for accounts because there is no need of scanning all product codes for so many buyers. Moreover, according to an embodiment of the inventive concept, since a seller generates a payment code for a product to be bought by a buyer and then proposes the payment code to the buyer, and the buyer settles payment after identifying the payment code, it may be allowable to accomplish an unmanned and automatic system and to provide more secured and simplified payment environments because a payment instrument of the buyer is totally unexposed to a seller.

An apparatus described above may be implemented in hardware elements, software elements, and/or a combination of hardware and software elements. For example, an apparatus, unit, or element described above may be implemented with one or more universal or special computers, such as processor, controller, Arithmetic Logic Unit (ALU), digital signal processor, microcomputer, Field Programmable Gate Array (FPGA), Programmable Logic Unit (PLU), microprocessor, or other units capable of executing and responding instructions. A processing unit may perform an Operating System (OS) and one or more software applications executed in the OS. Additionally, a processing unit may access, store, control, and generate data in response to software executions. Although some embodiment is illustrated as employing one processing unit for convenience of understanding, it can be seen by those skilled in the art that a plurality and/or diversity of processing elements may be included in use. For example, a processing unit may include a plurality of processors or one processor and one controller. Additionally, a processing unit may be formed in other processing configuration like a parallel processor.

Software may include computer programs, codes, instructions, or one or more combinations with them, may configure a processing unit, or may instruct a processing unit independently or collectively. For being interpreted by a processing unit or for providing instructions or data to a processing unit, software and/or data may be embodied permanently or temporarily in some kind of machine, component, physical apparatus, virtual equipment, computer storage medium or unit, or transmitted signal wave. Software may be distributed in computer systems connected through a network and may be stored and executed in distribution. Software and data may be stored in one or more computer-readable recording media.

Methods according to embodiments of the present disclosure may be implemented in the form of program instructions executable through diverse computing means and may be recorded in computer readable media. The computer readable media may include independently or associatively program instructions, data files, data structures, and so on. Program instructions recorded in the media may be specially designed and configured for embodiments, or may be generally known by those skilled in the computer software art. Computer readable recording media may include magnetic media such as hard disks and floppy disks, optical media such as CD-ROM and DVD, magneto-optical media such as floptical disks, and hardware units, such as ROM, RAM, flash memory, and so on, which are intentionally formed to store and perform program instructions. Program instructions may include high-class language codes executable by computers using interpreters, as well as machine language codes likely made by compilers. The hardware units may be configured to function as one or more software modules for performing operations according to embodiments of the present disclosure, and vice versa.

While embodiments of the present disclosure have been shown and described with reference to the accompanying drawings thereof, it will be understood by those skilled in the art that various changes and modifications in form and details may be made therein without departing from the spirit and scope of the present disclosure as defined by the appended claims and their equivalents. For example, it may be allowable to achieve desired results although the embodiments of the present disclosure are performed in other sequences different from the descriptions, and/or the elements, such as system, structure, device, circuit, and so on, are combined or assembled in other ways different from the descriptions, replaced or substituted with other elements or their equivalents.

Therefore, other implementations, other embodiments, and equivalents of the appended claims may be included in the scope of the appended claims.

## Claims

1. A payment service method comprising:
identifying first code information for product order;
transmitting the first code information to a seller terminal;
identifying second code information that is proposed for payment from the seller terminal for the first code information; and
processing payment information, which is included in the second code information, through communication with a payment server.

2. The payment service method of claim 1, wherein the first code information includes a product price, and
wherein the first code information further includes at least one product information among supplemental information relevant to conditions of product name, product volume, and product selling.

3. The payment service method of claim 1, wherein the seller terminal generates the second code information, which includes a payment request price, from the first code information.

4. The payment service method of claim 1, wherein the processing of the payment information included in the second code information comprises:
transmitting information of a selected payment instrument to the payment server and requesting payment by the payment instrument.

5. A payment service method comprising:
receiving first code information, which is for product order and identified at a buyer terminal, from the buyer terminal;
generating second code information, which is for payment to the first code information, from the first code information; and
outputting the second code information through output means and proposing the second code information to the buyer terminal,
wherein the buyer terminal identifies the second code information and processes payment information included in the second code information.

6. The payment service method of claim 5, wherein the generating of the second code information comprises:
generating the second code information, which includes a payment request price, from the first code information.

7. The payment service method of claim 7, wherein the generating of the second code information comprises:
generating the second code information with one of multi-dimensional codes among barcode, Quick Response (QR) code, data matrix, and maxicode.

8. A payment service method comprising:
transmitting first code information, which is for product order and identified at a buyer terminal, to a seller terminal in response to a request of the buyer terminal;
receiving second code information, which is for payment and generated from the seller terminal for the first code information, from the buyer terminal; and
processing payment information, which is included in the second code information, in response to a payment request of the buyer terminal,
wherein the buyer terminal processes the payment information after identifying the second code information that is proposed from the seller terminal.

9. The payment service method of claim 8, further comprising:
storing at least one payment instrument relevant to the buyer terminal,
wherein the processing of the payment information included in the second code information comprises:
processing the payment information by a payment instrument, which is selected by the buyer terminal, from payment instruments.

10. The payment service method of claim 8, further comprising:
if the processing of the payment information is completed, transmitting a result of payment approval to the buyer terminal and the seller terminal.
